# EUROPEAN PATENT APPLICATION

(11) **EP 4 790 524 A1**
(43) Date of publication of application: **12.08.2026**
(21) Application number: 24892589.3
(22) Date of filing: 29.01.2024
(51) Int. Cl.: G06F 3/023, G06F 3/0486, G06F 16/332, G06F 40/20, G06F 40/30, G06N 20/00

(54) **INTERACTION METHOD AND SYSTEM BASED ON NATURAL LANGUAGE, AND STORAGE MEDIUM**

(30) Priority: 21.11.2023 CN 202311558786
(71) Applicant: Hansong (Nanjing) Technology Limited, Nanjing, Jiangsu 211106 (CN)
(72) Inventor: CHEN, Yang, Nanjing, Jiangsu 211106 (CN); WANG, Zhipeng, Nanjing, Jiangsu 211106 (CN); KE, Mengling, Nanjing, Jiangsu 211106 (CN); MA, Min, Nanjing, Jiangsu 211106 (CN); CAO, Tianying, Nanjing, Jiangsu 211106 (CN)
(74) Representative: Dai, Simin
(86) International application number: PCT/CN2024/074502
(87) International publication number: WO 2025/107420

(57) **Abstract**

The present disclosure relates to a method, a system, and a storage medium for interaction based on natural language, wherein the method is executed by a processor and includes: determining target input information of a user based on initial input information of the user and tag information of an operable object, wherein the tag information reflects a feature of the operable object; determining a target operation based on at least one of the initial input information or the target input information, wherein the target operation includes at least one of a display screen operation, an input correction operation, and an intelligent customer service interaction; and generating an operation feedback based on at least one of the initial input information or the target input information, wherein a feedback interface of the operation feedback includes a user modification window.

## Description

### CROSS-REFERENCE TO RELATED APPLICATIONS

This application is a continuation of International Patent Application No. PCT/CN 2024/074502, filed on January 29, 2024, which claims priority to the Chinese Patent Application No. 202311558786.4, filed on November 21, 2023, the contents of which are hereby incorporated by reference.

### TECHNICAL FIELD

The present disclosure generally relates to a field of human-computer interaction technology, and in particular to a method, a system, and a storage medium for interaction based on natural language.

### BACKGROUND

Currently, many software applications (e.g., audio/video playback software, audio/video auxiliary software, other audio applications, etc.) have a high usage threshold. Users may have insufficient understanding of product functions, or be unable to use or fully utilize the software's functions. Most novice users lack a good user experience.

Therefore, a method, a system, and a storage medium for interaction based on natural language are desired to simplify operations of a user on software, thereby improving a usage experience of the user.

### SUMMARY

One or more embodiments of the present disclosure provide a method for interaction based on natural language. The method is executed by a processor and includes: determining target input information of a user based on initial input information of the user and tag information of an operable object, wherein the tag information reflects a feature of the operable object; determining a target operation based on at least one of the initial input information or the target input information, wherein the target operation includes at least one of a display screen operation, an input correction operation, and an intelligent customer service interaction; and generating an operation feedback based on at least one of the initial input information or the target input information, wherein a feedback interface of the operation feedback includes a user modification window.

One or more embodiments of the present disclosure provide a system for interaction based on natural language. The system includes: a first determining module, configured to determine target input information of a user based on initial input information of the user and tag information of an operable object, wherein the tag information reflects a feature of the operable object; a second determining module, configured to determine a target operation based on at least one of the initial input information or the target input information, wherein the target operation includes at least one of a display screen operation, an input correction operation, and an intelligent customer service interaction; and a generating module, configured to generate an operation feedback based on at least one of the initial input information or the target input information, wherein a feedback interface of the operation feedback includes a user modification window.

One or more embodiments of the present disclosure provide a non-transitory computer-readable storage medium. The storage medium stores computer instructions, and when a computer reads the computer instructions in the storage medium, the computer executes the method for interaction based on natural language according to any one of the foregoing embodiments.

### BRIEF DESCRIPTION OF THE DRAWINGS

The present disclosure will be further illustrated by way of exemplary embodiments. These exemplary embodiments will be described in detail with reference to the accompanying drawings. These embodiments are not restrictive. In these embodiments, the same reference numerals denote the same structures, wherein:
FIG. 1 is a schematic diagram illustrating an application scenario of a system for interaction based on natural language according to some embodiments of the present disclosure;
FIG. 2 is a flowchart illustrating an exemplary process for interaction based on natural language according to some embodiments of the present disclosure;
FIG. 3 is a schematic diagram illustrating an exemplary operable object according to some embodiments of the present disclosure;
FIG. 4 is a schematic diagram illustrating an exemplary display screen operation according to some embodiments of the present disclosure;
FIG. 5 is a schematic diagram illustrating an exemplary input correction operation according to some embodiments of the present disclosure;
FIG. 6 is a schematic diagram illustrating another exemplary input correction operation according to some embodiments of the present disclosure;
FIG. 7 is a schematic diagram illustrating an exemplary voice feedback according to some embodiments of the present disclosure;
FIG. 8 is a schematic diagram illustrating an exemplary card feedback according to some embodiments of the present disclosure;
FIG. 9 is a schematic diagram illustrating an exemplary user modification window according to some embodiments of the present disclosure;
FIG. 10 is a schematic diagram illustrating another exemplary card feedback according to some embodiments of the present disclosure;
FIG. 11 is a schematic diagram illustrating an exemplary intelligent correction model according to some embodiments of the present disclosure;
FIG. 12 is a schematic diagram illustrating an exemplary prediction model according to some embodiments of the present disclosure;
FIG. 13 is a schematic diagram illustrating an exemplary prediction result according to some embodiments of the present disclosure;
FIG. 14 is a schematic diagram illustrating an exemplary prediction recommendation model according to some embodiments of the present disclosure; and
FIG. 15 is a block schematic diagram illustrating an exemplary system for interaction based on natural language according to some embodiments of the present disclosure.

### DETAILED DESCRIPTION

In the following detailed description, numerous specific details are set forth by way of examples in order to provide a thorough understanding of the relevant disclosure. Obviously, drawings described below are only some examples or embodiments of the present disclosure. Those skilled in the art, without further creative efforts, may apply the present disclosure to other similar scenarios according to these drawings. Unless obviously obtained from the context or the context illustrates otherwise, the same numeral in the drawings refers to the same structure or operation.

It will be understood that the terms "system," "device," "unit," and/or "module" used herein are one method to distinguish different components, elements, parts, sections, or assemblies of different levels in ascending order. However, the terms may be displaced by other expressions if they may achieve the same purpose.

As used herein, the singular forms "a," "an," and "the" may be intended to include the plural forms as well, unless the context clearly indicates otherwise. It will be further understood that the terms "include" and/or "comprise," merely indicate the inclusion of explicitly identified operations and elements, and these operations and elements do not constitute an exhaustive list, and a process or a device may also include other operations or elements.

The flowcharts used in the present disclosure illustrate operations that systems implement according to some embodiments of the present disclosure. It is to be expressly understood, the operations of the flowcharts may be implemented not in order. Conversely, the operations may be implemented in an inverted order, or simultaneously. Moreover, one or more other operations may be added to the flowcharts. One or more operations may be removed from the flowcharts.

Audio software or other professional software, web pages, or the like, have relatively high professionalism, and are still relatively complex after the interface is simplified by manners such as design simplification and function simplification. In view of this, some embodiments of the present disclosure propose a method for interaction based on natural language, regarding how to simplify user operations. First, initial input information of a user and tag information of an operable object are obtained to determine target input information. According to the initial input information and/or the target input information, a target operation is determined and an operation feedback is generated, which can implement the method for interaction based on natural language, helping to enable the user to simply and clearly use software or web pages, and improve user usage efficiency and usage experience.

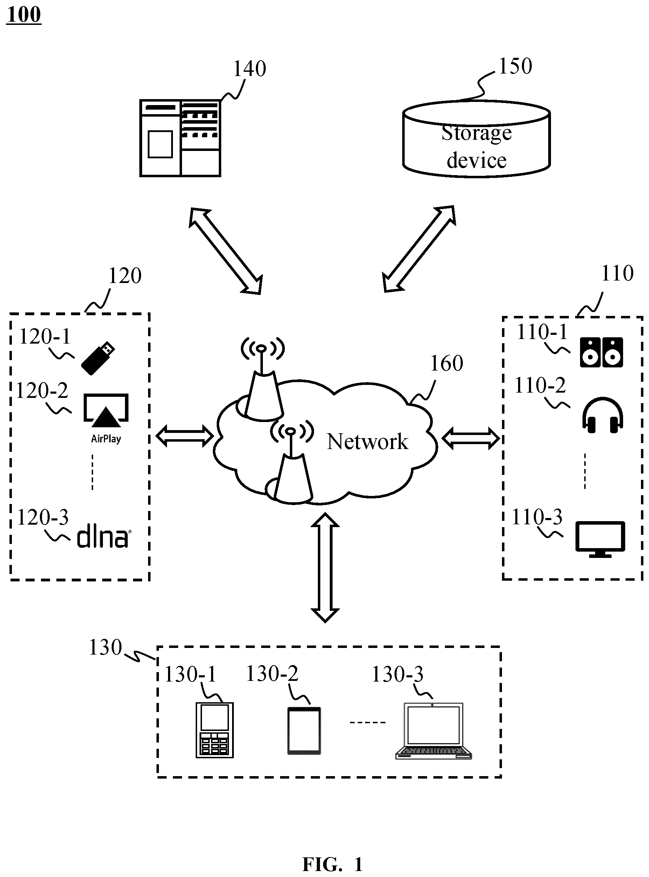

FIG. 1 is a schematic diagram illustrating an application scenario of a system for interaction based on natural language according to some embodiments of the present disclosure.

As shown in FIG. 1, an application scenario 100 of a system for interaction based on natural language may include an audio device 110, a sound source 120, a user terminal 130, a processor 140, a storage device 150, a network 160, or the like.

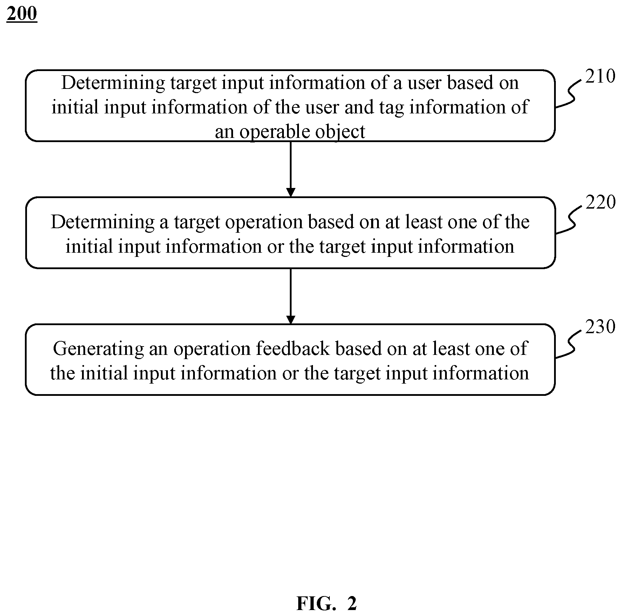

The audio device 110 refers to a device installed in various synthesis partitions (such as synthesis partition 1, synthesis partition 2, ..., synthesis partition n) and having a function of playing sound sources. More descriptions regarding the synthesis partitions may be found in FIG. 2 and related descriptions thereof. For example, the audio device 110 may include a loudspeaker 110-1, a music player 110-2 (e.g., an iPod or an MP3 player), or the like. In some embodiments, the audio device 110 may also have a video playback function. For example, the audio device 110 may also be a television 110-3, or the like. In some embodiments, the audio device 110 may have one or more speakers. The type of the audio device is not limited in the present disclosure. The audio device 110 may send basic information of the audio device 110 to the processor 140 through the network 160 for subsequent processing. The basic information of the audio device 110 may include a Media Access Control (MAC) address, an account, a device type, a device name, or the like. In some embodiments, the audio device 110 may also receive and execute an operation instruction issued by the processor 140. For example, the audio device 110 may receive a playback instruction issued by the processor 140 and perform playback based on the playback instruction.

In some embodiments, the sound source 120 refers to a sound source that a user expects to play. For example, the sound source 120 may be an audio signal interface, such as a Universal Serial Bus (USB) 120-1, a Sony/Philips Digital Interface Format (SPDIF) interface, an Auxiliary (AUX) interface, or the like, or any combination thereof. As another example, the sound source 120 may include audio signals based on a music push playback manner, such as AirPlay 120-2, Digital Living Network Alliance (DLNA) 120-3, QPlay, or the like, or any combination thereof. The type of an audio signal source is not limited in the present disclosure. In some embodiments, the processor 140 sends an audio signal to a matching audio device 110 for playback according to a configuration of the user.

The user refers to a user that uses an audio device. For example, in a home scenario, the user may be a family member. As another example, in a business scenario, the user may be a property manager. The user may issue the user instruction through the user terminal 130. For example, the user may perform operations, such as grouping of audio devices and selecting at least one audio device to play music, through the user terminal 130. In some embodiments, the user terminal 130 may obtain user input (also referred to as the input of the user) through a plurality of manners (such as a voice or a text).

The user terminal 130 refers to a terminal device that provides an operation function, a display function, etc., for interacting with the user. In some embodiments, the user terminal 130 may obtain the user instruction based on user input or other operations, and send the user instruction to the storage device 150 and/or the processor 140 for storage and/or subsequent processing. The user instruction may include a grouping instruction, a partitioning instruction, or the like.

In some embodiments, the user terminal 130 may include an input apparatus and an output apparatus. Exemplary input apparatuses may include a keyboard, a mouse, a touch screen, and a microphone, or the like, or any combination thereof. Exemplary output apparatuses may include a display device, a speaker, a printer, and a projector, or the like, or any combination thereof. Exemplary display devices may include a liquid crystal display (LCD), a light-emitting diode (LED) based display, a flat panel display, a curved display, a television device, a cathode ray tube (CRT), or the like, or any combination thereof.

In some embodiments, the user terminal 130 may include a mobile device 130-1, a tablet computer 130-2, a laptop computer 130-3, or the like, or any combination thereof.

In some embodiments, the user terminal 130 may process information and/or data. For example, the user terminal 130 may process related feature information in response to an operation instruction of the user. Illustratively, the user terminal 130 may tag an operable object based on the operation instruction of the user. In some embodiments, the user terminal 130 may be configured to receive and/or present information sent by the processor 140. For example, the user terminal 130 may present full list information of the audio device obtained from the processor 140 to the user on the interactive interface. In some embodiments, the user terminal 130 may send operation instructions and/or related feature information to one or more components in the application scenario 100 of the system for interaction based on natural language. For example, the user terminal 130 may send an operation instruction for the user to select a prediction result and an operation instruction for tagging the operable object to the processor 140 for processing, or send the operation instructions to the storage device 150 for storage. The operation instructions of the user may include a grouping instruction, a partitioning instruction, a tagging instruction, or the like.

In some embodiments, the interactive interface may be configured to interact with the user (such as real-time interaction). For example, a dialog box of the interactive interface may be configured to obtain initial input information of the user. In some embodiments, the dialog box may be of any shape, e.g., a rectangle, an ellipse, an irregular graphic, or the like. In some embodiments, the dialog box may include icons of input tools (e.g., a keyboard, a mouse, a microphone, a touch screen, etc.), function buttons (e.g., send, collect, forward, save, end conversation, zoom in/out of the dialog box, set dialog box style, etc.), conversation subject (e.g., the user and intelligent customer service) information, historical conversation content, or the like, or any combination thereof.

The processor 140 may be configured to manage data resources and process data and/or information from at least one component involved in the application scenario 100 of the system for interaction based on natural language or an external data source (e.g., a cloud data center). The processor 140 may execute program instructions based on the data, information, and/or processing results, so as to perform one or more functions described in the present disclosure.

In some embodiments, the processor 140 may receive the grouping instruction sent by the user terminal 130 and generate device grouping information based on the grouping instruction. In some embodiments, the processor 140 may receive the playback instruction sent by the user terminal 130, and then send the playback instruction to the corresponding audio device 110. In some embodiments, the processor 140 may receive the operation instruction of the user sent by the user terminal 130, and automatically perform sound source pairing and playback based on the operation instruction of the user.

In some embodiments, the processor 140 may receive input information from the user terminal 130. The user terminal 130 may include the touch screen, and the user may click or drag on the touch screen to perform input. For example, the user terminal 130 may include the microphone, and the user may perform voice input by using the microphone. As another example, the user terminal 130 may include a camera, and the camera may obtain gestures of the user as input. For a further example, the user terminal 130 may include an external mouse, and the user may perform input through the external mouse. As yet another example, the user terminal 130 may include an external keyboard, and the user may perform text input through the external keyboard.

In some embodiments, the processor 140 may include one or more sub-processing devices (e.g., a single-core processing device or a multi-core and multi-chip processing device). Merely by way of example, the processor 140 may include one of a central processing unit (CPU), a graphics processing unit (GPU), or the like, or any combination thereof.

The storage device 150 may be configured to store data and/or instructions. For example, the storage device 150 may be used for storing the operation instruction of the user transmitted by the user terminal 130 through the network 160. As another example, the storage device 150 may also be configured to store one or more pieces of instruction data issued by the processor 140 to the user terminal 130 or the audio device 110. In some embodiments, the storage device 150 may also store data reported by the audio device 110, for example, the basic information reported by the audio device 110. In some embodiments, data communication may be performed between the storage device 150 and the processor 140 through the network 160. The storage device 150 may also be a part of the processor 140.

In some embodiments, the storage device 150 may include a random access memory (RAM), a read-only memory (ROM), a mass storage, or the like, or any combination thereof.

The network 160 may connect various component parts of the system and/or connect the system with an external resource part. The network 160 enables communication to be performed among the various component parts, as well as with other parts outside the system, to facilitate exchange of data and/or information.

In some embodiments, one or more components of the application scenario 100 of the system for interaction based on natural language may transmit data to other components of the application scenario 100 of the system for interaction based on natural language through the network 160. For example, the processor 140 may obtain information and/or data from the user terminal 130, the audio device 110, and the storage device 150 through the network 160, or may send information and/or data to the user terminal 130 and the storage device 150 through the network 160. In some embodiments, the data communication may also be directly performed among one or more components of the application scenario 100.

It should be noted that the application scenario 100 of the system for interaction based on natural language is provided merely for illustrative purposes and is not intended to limit the scope of the present disclosure. For those skilled in the art, a plurality of modifications or variations may be made according to the description of the present disclosure. For example, the application scenario 100 of the system for interaction based on natural language may implement similar or different functions on other devices. However, these variations and modifications will not depart from the scope of the present disclosure.

FIG. 2 is a flowchart illustrating an exemplary process for interaction based on natural language according to some embodiments of the present disclosure. In some embodiments, the process 200 may be executed by the processor 140 or a system for interaction based on natural language 1500. As shown in FIG. 2, the process 200 includes the following operations.

In 210, target input information of a user may be determined based on initial input information of the user and tag information of an operable object. In some embodiments, the operation 210 may be executed by the processor 140 or a first determining module 1510.

More descriptions regarding the user may be found in FIG. 1 and related description thereof.

The initial input information refers to a content in a dialog box of a user input interface. The initial input information may include various forms such as a text, an image, a voice, or the like. In some embodiments, the initial input information may include keywords, phrases, or complete sentences input by the user.

In some embodiments, the processor may obtain information input by the user and determine the information as the initial input information. The various manners of input include but are not limited to touch input, voice input, image recognition input, and external device input.

In some embodiments, the user may click an icon of an input tool on the dialog box to select the corresponding input tool and start inputting information. For example, after the user clicks a microphone icon, the microphone icon changes to a dynamic form of "recording", and the user can input voice information at this time. In some embodiments, the user may complete a corresponding operation through manual clicking of a function button, or may utilize the aforementioned input tool to complete the corresponding operation through inputting corresponding instructions. For example, the user may select an interaction content (such as a prediction result, etc.) issued by an intelligent customer service, click a favorite button, and add the content to the dialog box. As another example, the user may end a current conversation by inputting "end conversation" on a keyboard and sending the "end conversation" to the intelligent customer service. In some embodiments, the dialog box may be automatically invoked or actively invoked by the user. For example, the dialog box of the interaction interface may automatically enable the dialog box based on user usage scenario information to ask the user whether interaction is needed. For example, when an audio system is started, the user may invoke the dialog box by issuing a voice instruction for invoking the dialog box, clicking a button for invoking the dialog box, imitating a gesture for invoking the dialog box, or the like.

The intelligent customer service refers to a system that achieves natural interaction between users through technologies such as natural language processing and voice recognition, or the like.

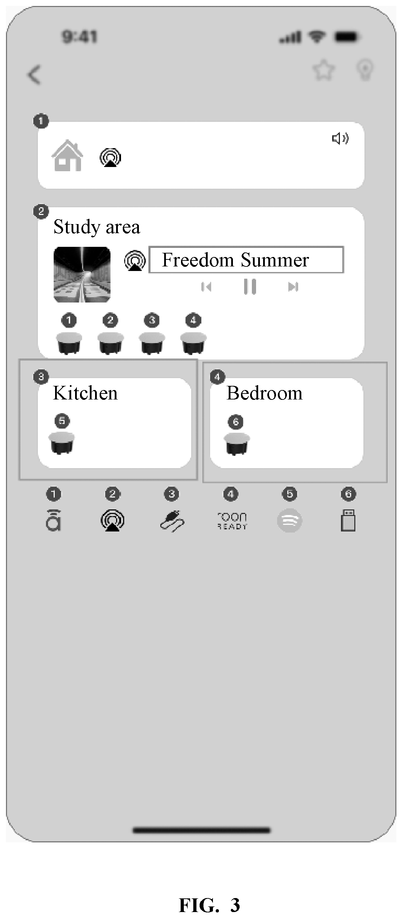

The operable object refers to a target operable in an interface, for example, at least one of a device, a synthesized partition, an audio source, or the like in the interface. FIG. 3 is a schematic diagram illustrating an exemplary operable object according to some embodiments of the present disclosure. As shown in FIG. 3, the device included in the operable object may include a player, a USB, or the like. The operation refers to clicking, selecting, touching, or the like on the target. The synthesized partition refers to a synthesized virtual area in the interface, which reflects a real partition of a target area (such as a home space) where the user wants to perform audio-related operations. The audio-related operations may include playing music in a specific partition of the target area, or on a specific player. As shown in FIG. 3, in the home space, the synthesized partition may include a kitchen partition, a bedroom partition, or the like. The audio source may include music software such as airplay2, spotify, or the like, and may also include other local inputs (such as analog input, etc.).

It should be noted that the interaction interface includes the operable object and a non-operable object. The non-operable object refers to a target non-operable in the interface, for example, feedback information of software may be a non-operable object. The feedback information of software refers to related information that the software provides as feedback for the initial input information and/or the target input information of the user, e.g., a currently playing song, a device noun, a partition noun, or the like.

The tag information refers to related information for tagging the operable object. In some embodiments, the tag information may reflect a feature (such as a type, a name, etc.) of the operable object. Illustratively, as shown in FIG. 3, the synthesized partitions may include a default partition 1, a study area 2, a kitchen 3, and a bedroom 4. The default partition 1 may be used for playing an audio signal from airplay2. The study area 2 is playing an audio signal from airplay2, and the audio signal is "Freedom Summer". The study area 2 includes four audio devices, including an audio device 1, an audio device 2, an audio device 3, and an audio device 4. The kitchen 3 includes an audio device 5, and the bedroom 4 includes an audio device 6. The tag information of audio sources Airable1, airplay2, AUX, roon, spotify, and mobile storage devices such as USB flash drives is 1, 2, 3, 4, 5, and 6 respectively.

In some embodiments, the processor may obtain the tag information through various manners. In some embodiments, the processor may obtain the tag information based on an operation of the user. The operation of the user may include various manners such as manual, input control, or the like. In some embodiments, the user may use various forms to tag the operable object, for example, Arabic numerals, English letters, representative characters (such as a first letter of the operable object), or personalized settings of the user. The present disclosure is not limited thereto. Illustratively, the user may tag the operable object by long pressing the operable object. As another example, by inputting "tag speaker 1 as 1", the user may cause the processor to determine the tag information of the speaker 1 as 1. By tagging the operable object, the user can simplify the initial input information "Please help me adjust the volume of the speaker 1 to 50" to "Please help me adjust the volume of 1 to 50" in subsequent inputs, which effectively simplifies the input of the user.

In some embodiments of the present disclosure, the user may refer to the corresponding operable object through tag information. When the name of the operable object is a complex or specialized noun, the user may quickly control the operable object through only simple tag information, which facilitates user operation.

The target input information refers to information finally sent by the user. The target input information can more completely and accurately reflect the intention of the user.

In some embodiments, the processor may determine the target input information of the user through various manners based on the initial input information of the user and the tag information of the operable object. For example, the processor may extract keywords based on the initial input information and the tag information, search in a database based on the keywords, and determine the target input information. The database may include a plurality of reference target input information. The database may be built based on historical target input information. For example, if the keywords extracted by the processor based on the initial input information and the tag information are "1", "volume", and "50", the processor may determine the target input information as "Please help me adjust the volume of the speaker 1 to 50" by searching in the database according to the aforementioned keywords.

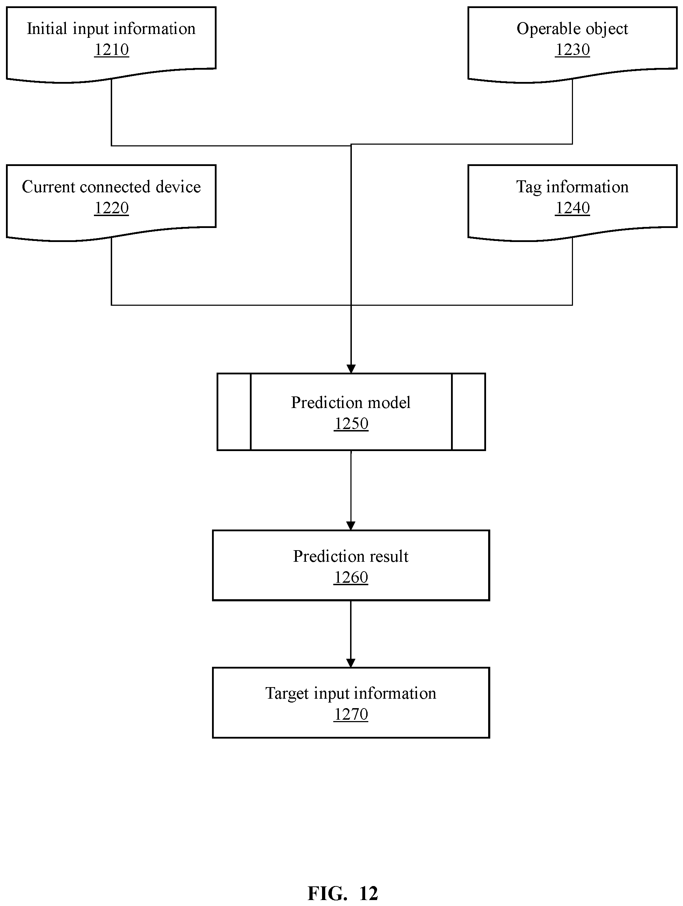

In some embodiments, the processor may determine a prediction result through a prediction model based on the initial input information, a current connected device, the tag information of the operable object, and then determine the target input information. For more content may be found in FIG. 12 and related description thereof.

In some embodiments, the processor may determine the target input information based on the initial input information through an input correction operation. For more content may be found in the related description in a subsequent section of FIG. 2.

In some embodiments, the processor may determine the target input information based on a drag instruction of the user for the operable object in a display screen.

During inputting, the display screen dynamically changes in real time according to the input of the user.

The operable object refers to an element of the display screen (such as texts, images, links, forms, or other interactive elements).

The drag instruction is used for moving the operable object of the display screen. In some embodiments, the processor may capture an operation of the user moving the operable object via the mouse or touch and determine the drag instruction. In some embodiments, the drag instruction may include a direction of movement, a target movement position, and text information corresponding to the operable object (such as "speaker 1", "speaker 2", etc.). The target movement position is the dialog box.

In some embodiments, the processor may capture an operation of the user dragging the operable object into the dialog box via the mouse or touch, determine the drag instruction of the user, take a name corresponding to the operable object as a portion of the target input information, insert the name into the initial input information, and display the name in the dialog box. In some embodiments, an insertion position may be a position of a current insertion point, a position of the end of the text of the initial input information, or a position of another insertion point selected by the user. The insertion point refers to a point in the dialog box used for indicating a text insertion position. In some embodiments, the interactive interface may display the insertion point in a form of a cursor (such as a flickering short vertical line, etc.).

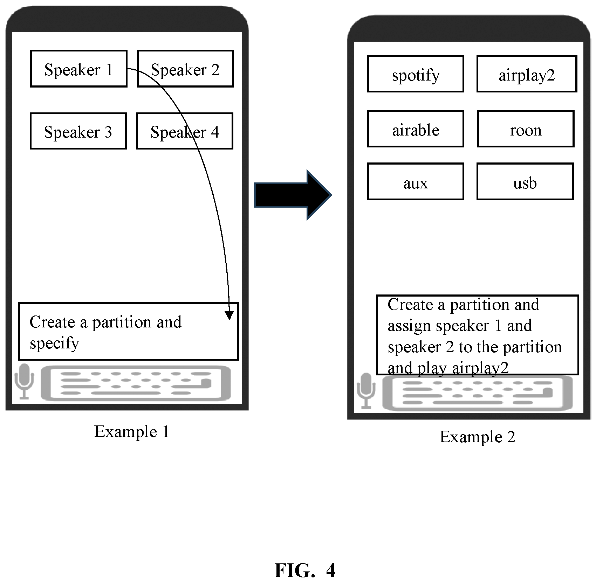

In some embodiments, when inputting the initial input information, the user may drag the operable object displayed in the interface into the dialog box. Correspondingly, the processor may obtain the drag instruction of the user, convert the operable object dragged by the user into the dialog box into a name corresponding to the operable object, to speed up the input of the user. For example, in Example 1 of FIG. 4, the user may respectively drag the operable objects "speaker 1" and "speaker 2" into the dialog box, and the content in the dialog box becomes "create a partition and specify speaker 1 and speaker 2".

In some embodiments of the present disclosure, determining the target input information through the drag instruction may achieve a purpose of speeding up the input of the user and improving user experience.

In some embodiments, the operable object may include at least one of a draggable target and a non-draggable target, and a first presentation mode corresponding to the draggable target is different from a first presentation mode corresponding to the non-draggable target.

The draggable target refers to an element in the interactive interface that can be moved.

The non-draggable target refers to an element in the interactive interface that cannot be moved. For example, if a function corresponding to a certain element may have a failure (such as audio file damage, inability to play, inability to open, etc.), or if the element is restricted from being moved, the user's drag action is not supported.

The first presentation mode is a presentation mode used for distinguishing between the draggable target and the non-draggable target. The presentation mode is a manner of displaying an element on a display area of the interactive interface. The presentation mode includes, but is not limited to: display position information, display appearance information, and a hierarchical relationship with other elements in the display area. The display position information refers to a position of the element in the interactive interface. The display appearance information refers to an appearance presented by the element in the interactive interface, for example, a font style, a layout style, a border and background style, animation and transition effects, a hierarchical relationship, or the like. The hierarchical relationship refers to a hierarchical structure among elements in the interactive interface. When elements overlap, elements with a higher hierarchy are displayed on top, covering elements with a lower hierarchy.

In some embodiments, the first presentation mode may be achieved by a plurality of manners. For example, the draggable target and the non-draggable target may be displayed with different colors, different font weights, or the like, respectively. By way of example, the draggable target that has been dragged into the dialog box is presented in a form of a border with a gray shadow, the non-draggable target is presented in a form of a border with a black shadow, and an undragged draggable target is presented in a form of a border.

In some embodiments, the processor may preset a presentation mode corresponding to the draggable target and the non-draggable target, as the first presentation mode. In some embodiments, the processor may further obtain the first presentation mode through manual input.

In some embodiments of the present disclosure, presenting different elements (such as draggable elements, non-draggable elements, etc.) to the user through different presentation modes in the interface may facilitate the user to quickly select a desired draggable target, increase the convenience of input, improve input efficiency, and enhance user experience.

In some embodiments, the display screen originates from at least one platform, and the at least one platform corresponds to a second presentation mode of the operable object; and/or the display screen originates from at least one system, and the at least one system corresponds to a third presentation mode of the operable object. The second presentation mode is different from the third presentation mode.

The system refers to an operating system with a graphical interface, for example, a desktop operating system, a mobile operating system, an embedded operating system, or the like, or any combination thereof.

Since the display screen dynamically changes in real time according to the input information of the user, the display screen may originate from different systems. By way of example, when the initial input information of the user includes operable objects of a plurality of systems, the operable objects of the display screen may originate from different versions of an operating system, such as a previous version of the operating system, a latest version of the operating system, or the like.

Cross-system refers to operating (such as moving, tagging, etc.) draggable targets originating from different systems in the same display screen.

The platform refers to a hardware environment that includes the operating system. For example, the hardware environment refers to a computer physical system composed of a processing device and peripheral devices thereof, and includes a mobile device, a tablet computer, a desktop computer, or the like.

Since the display screen dynamically changes in real time according to the input information of the user, the display screen may originate from different platforms. By way of example, when the initial input information of the user includes operable objects of a plurality of platforms, the operable objects of the display screen may originate from different platforms, such as roon and spotify.

Cross-platform refers to operating (such as moving, tagging, etc.) draggable targets originating from different platforms in the same display screen.

The second presentation mode is a presentation mode used for distinguishing operable objects presented by different platforms. In some embodiments, the second presentation mode includes a plurality of different presentation modes, and each platform may correspond to a presentation mode respectively.

The third presentation mode is a presentation mode used for distinguishing operable objects presented by different systems. In some embodiments, the third presentation mode includes a plurality of different presentation modes, and each system may correspond to a presentation mode respectively.

In some embodiments, the second presentation mode may be achieved by a plurality of manners. For example, the operable objects of different platforms may be displayed with different border colors or different background colors. In some embodiments, the third presentation mode may be achieved by a plurality of manners. For example, the operable objects of different systems may be displayed with different border types.

In some embodiments, the processor may preset a presentation mode corresponding to different platforms as the second presentation mode. In some embodiments, the processor may further obtain the second presentation mode through manual input.

In some embodiments, the processor may preset a presentation mode corresponding to different systems as the third presentation mode. In some embodiments, the processor may further obtain the third presentation mode through manual input.

In some embodiments, by displaying the operable objects from different platforms and/or different systems respectively through the second presentation mode and/or the third presentation mode, the user may move the draggable targets of other platforms and/or systems into the dialog box in the same interactive interface (such as an interactive interface of a mobile terminal or a desktop terminal, etc.), to achieve cross-platform and cross-system interaction. The mobile terminal refers to a related application used on a mobile device such as a mobile phone, a tablet, or the like. Correspondingly, the desktop terminal refers to a related application used on a fixed device such as a desktop computer, or the like.

In some embodiments of the present disclosure, cross-platform or cross-system dragging may enable the user to drag on a certain platform to control a function on another platform. Meanwhile, information (such as shared files, music, video, and various resources) may be obtained and shared through various devices and systems, making input more convenient and efficient. Through different presentation modes, the user can quickly distinguish operable objects from different sources (such as from different platforms or different operating systems), thereby improving the convenience of user operation and further improving the efficiency of input.

In 220, a target operation may be determined based on at least one of initial input information or target input information. In some embodiments, the operation 220 is executed by the processor 140 or a second determining module 1520.

The target operation refers to a relevant operation executed by the processor after receiving the initial input information and/or the target input information. In some embodiments, the target operation may include at least one of a display screen operation, an input correction operation, and an intelligent customer service interaction.

In some embodiments, the processor may analyze and process the initial input information and/or the target input information, and determine the target operation corresponding to the user input in a plurality of manners.

In some embodiments, the processor may trigger a corresponding target operation function based on the initial input information and/or the target input information of the user.

For example, in response to the initial input information and/or the target input information of the user being "display screen adjustment", "I want to adjust the display screen", or the like, the processor may determine the target operation as the display screen operation, and trigger the interaction interface to be a display screen operation mode.

As another example, in response to recognizing that an error exists in the initial input information of the user, the processor may determine the target operation as the input correction operation, and automatically trigger a correction function to correct the input information of the user in real time. More details regarding the input correction operation may be referred to in a related description below.

As yet another example, the processor may determine that the user intends to inquire about related operation tutorials, guidance information, or the like, of an application software based on semantic recognition of the initial input information and/or the target input information of the user, determine the target operation as the intelligent customer service interaction, and trigger an intelligent customer service interaction function. Further, the intelligent customer service interaction function obtains corresponding operation tutorials, guidance information, or the like, according to the specific information identified by the semantic recognition. More details regarding the intelligent customer service interaction may be referred to in a related description below.

The display screen operation refers to a relevant operation performed on a display screen of the interaction interface based on the initial input information and/or the target input information. The display screen operation may include switching the display screen based on the initial input information and/or the target input information (to display different display screens), and performing operations such as scaling, moving, and arranging of operable objects and information thereof in the interface. In some embodiments, the display screen operation may further include switching the display screen in real time, and scaling, moving, rearranging the operable objects and information thereof for presentation.

For example, if the initial input information and/or the target input information of the user is "Please help me adjust the volume of speaker 2 to 50", the processor may determine the target operation as the display screen operation based on the aforementioned initial input information. The processor may display a screen of the speaker 2 in the interface, and display that the volume of the speaker 2 is adjusted to 50.

As another example, if the initial input information and/or the target input information of the user is "I want to modify the learning zone", the processor may determine the target operation as the display screen operation based on the aforementioned initial input information. The processor may only display the display screen of the learning zone in the interface.

As yet another example, if the initial input information and/or the target input information of the user is "Please help me move the position of the learning zone up by 1 cm", the processor may move the learning zone on the interaction interface up by 1 cm and display it.

In some embodiments, after determining the target operation as the display screen operation, the processor may trigger the display screen operation mode. In the display screen operation mode, the user may perform a corresponding display screen operation via gestures on the interaction interface. For example, the user may scale, move, and arrange the displayed content on the interaction interface through gesture operations such as scaling, touching, dragging, box selection, or the like.

As shown in FIG. 4, FIG. 4 is a schematic diagram illustrating an exemplary display screen operation according to some embodiments of the present disclosure. In Example 1, the initial input information of the user is "create a partition and specify". The processor may, based on the aforementioned initial input information, display in the display screen speakers that can be specified (such as speaker 1, speaker 2, speaker 3, and speaker 4 in Example 1 in FIG. 4). In Example 2, the user, based on the display screen operation in Example 1, drags speaker 1 and speaker 2 into a dialog box. The processor may, in response to a drag instruction, insert corresponding names of speaker 1 and speaker 2 into a position at an end of the text of the initial input information, and update the initial input information. The user may, based on the updated initial input information, continue to input "and play". The processor may, based on the initial input information, display operable objects that can be played, such as airplay2 or spotify, in the interface. Airplay2 or spotify displayed in the interface are streaming media types supported by audio devices such as speaker 1, speaker 2, etc.

In some embodiments, the streaming media types supported by the same audio device group may be the same. For example, if an audio device group includes audio devices 1 to 3, and audio devices 1 to 3 all support five streaming media types (airplay2, spotify, roon, Digital Living Network Alliance (DLNA), and airable), then the streaming media types supported by the audio device group include the five streaming media types (airplay2, spotify, roon, DLNA, and airable).

In some embodiments, the streaming media types supported by the same audio device group may be different. In this case, the supported streaming media types are a union of the streaming media types supported by each audio device in the audio device group. For example, if an audio device group includes audio devices 1 to 3, audio device 1 supports airplay2 and spotify, audio device 2 supports spotify and roon, and audio device 3 supports airable, then the streaming media types supported by the audio device group are airplay2, spotify, roon, and airable.

The audio device group refers to one or more audio devices in the initial input information or the target input information.

In some embodiments, the processor may extract keywords based on the initial input information and/or the target input information. Then, based on the keywords, the processor may determine keyword attributes and replace the keywords to determine an adjusted keyword group. Then, based on the adjusted keyword group, the processor may retrieve in a database, to determine a content to be displayed in the interface.

The keyword refers to a word related to the content to be determined for display, for example, "create" and "specify" in "create a partition and specify".

The keyword attributes may include an operation keyword, a name keyword, or the like. The operation keyword refers to a keyword related to an operation, for example, "create", "modify", or the like. The name keyword refers to a keyword related to a name of an operable object, for example, a speaker, a partition, or tag information reflecting a name of an operable object, or the like.

Replacing the keywords refers to replacing a name keyword with an initial name of a corresponding operable object. For example, if "Yang 1" in a name keyword is the tag information of an operable object speaker 1, the processor may replace "Yang 1" with "speaker 1". The adjusted keyword group refers to a word group composed of keywords that have been replaced and keywords that do not need to be replaced.

The database may be constructed based on historical operation data and operation logic. For example, if the keyword "create" can only act on an operable object 1, then a retrieval result of "create" in the database only corresponds to the operable object 1.

Illustratively, the processor may use the adjusted keyword group ("create" and "specify") to retrieve in the database, and determine the retrieval results (speaker 1, speaker 2, speaker 3, and speaker 4) as the content to be displayed in the interface.

In some embodiments of the present disclosure, through the display screen operation, the display screen may be transformed in real time based on the user input, which may provide visual prompts to the user while facilitating user operation.

The input correction operation refers to an operation of automatically correcting the initial input information of the user. The input correction operation may perform correction on voice input or other input of the user (e.g., an image) converted into a text, and may also perform correction on a text input by the user.

In some embodiments, the processor may implement the input correction operation by a plurality of manners. For example, the processor may perform similarity analysis on a current text and a plurality of preset texts, and determine the most similar preset text as a corrected text. As another example, the processor may perform automatic correction on the initial input information based on a trained correction model. The correction model may be trained based on professional vocabularies, professional phrases, and professional sentence expressions in professional fields such as audio, or the like, as samples. After being trained, the correction model may perform correction on professional nouns, technical terms, or the like of audio software.

In some embodiments, the processor may perform automatic correction on the initial input information of the user, and determine corrected initial input information as the target input information.

For example, when the initial input information of the user is "adjust the volume to 80 and play ox in a living room", the processor may correct a mistyped professional term "ox" to "aux", thereby determining the target input information as "adjust the volume to 80 and play aux in a living room".

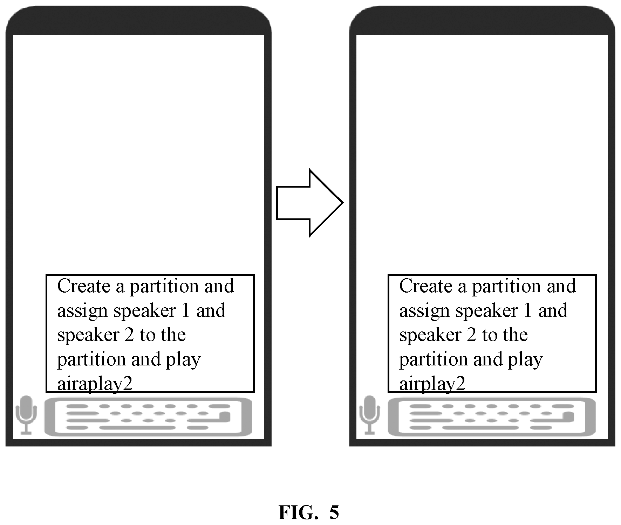

As shown in FIG. 5, FIG. 5 is a schematic diagram illustrating an exemplary input correction operation according to some embodiments of the present disclosure. The initial input information of the user is "create a partition and assign speaker 1 and speaker 2 to the partition and play airaplay2". The processor may correct the mistyped professional term "airaplay2" to "airplay2" through the trained correction model, thereby determining the target input information as "create a partition and assign speaker 1 and speaker 2 to the partition and play airplay2".

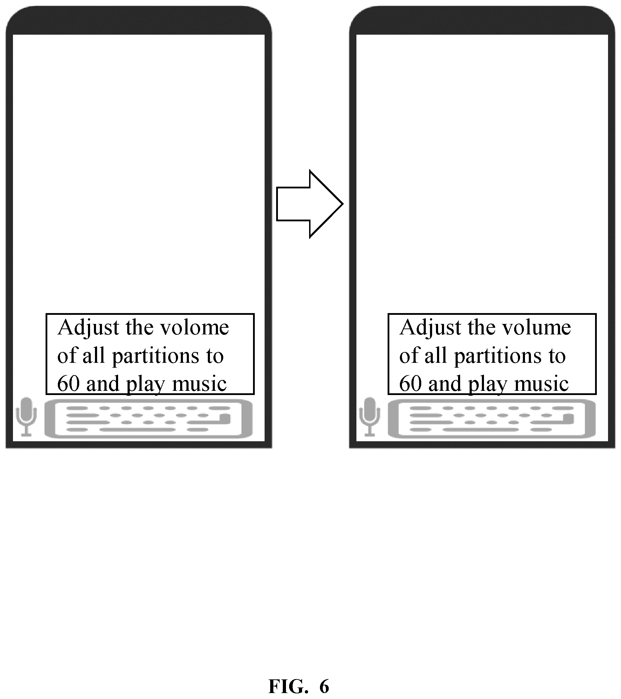

As shown in FIG. 6, FIG. 6 is a schematic diagram illustrating another exemplary input correction operation according to some embodiments of the present disclosure. The initial input information of the user is "adjust the volome of all partitions to 60 and play music". The processor may correct the mistyped professional term "volume" to "volume" through the trained correction model, thereby determining the target input information as "adjust the volume of all partitions to 60 and play music".

In some embodiments of the present disclosure, performing automatic correction on the initial input information through the trained correction model may improve accuracy of user input, further reduce the user's trial-and-error time, and help enhance the user experience.

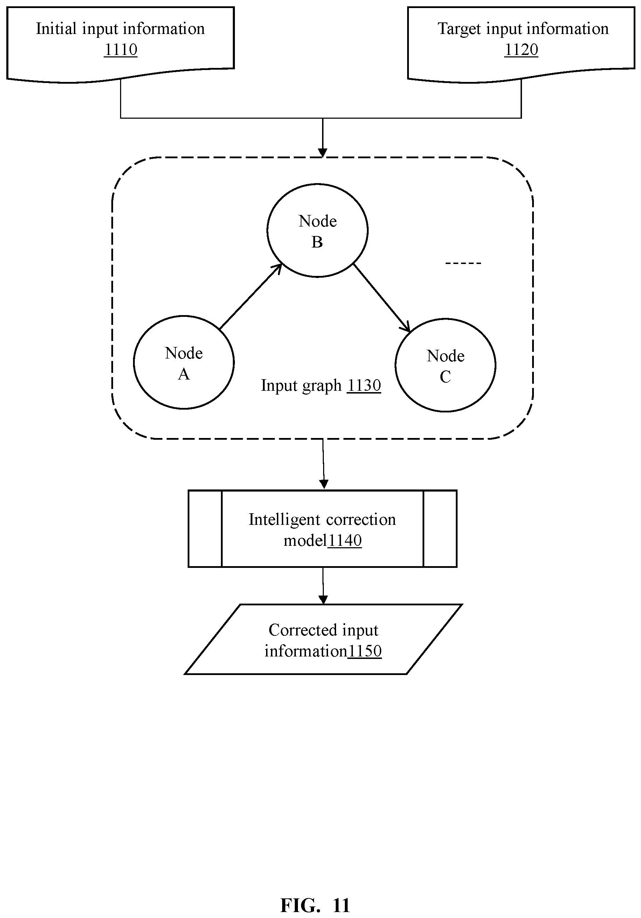

In some embodiments, the processor may determine corrected input information through an intelligent correction model based on at least one of the initial input information or the target input information, to perform automatic correction. More details may be found in FIG. 11 and related description thereof.

The intelligent customer service interaction refers to intelligent interaction between the processor and the interaction interface. In some embodiments, the intelligent customer service interaction may predict at least one of the target input information of the user, the operable object that the user wants to operate, an estimated usage function of the user, or a question that the user wants to ask. For more description regarding the process for predicting the target input information of the user may be found in FIG. 12 and related description thereof.

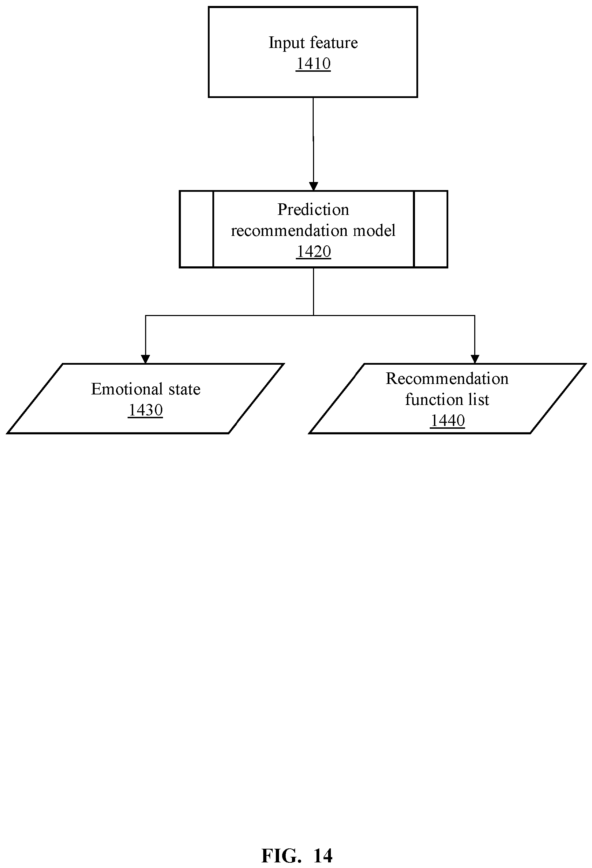

In some embodiments, the intelligent customer service interaction includes predicting an emotional state of the user. More details may be found in FIG. 14 and related description thereof.

In some embodiments, the processor may directly combine a prediction result with current initial input information of the user as the target input information and extract keywords of the target input information to predict the operable object that the user wants to operate or predict a function to be used. For example, when the current initial input information of the user is "speaker 1, speaker 2, then", the processor may combine the prediction result "play" with the initial input information as the target input information "speaker 1, speaker 2, then play", and extract the keywords based on the target input information to obtain the content presented on the interface. For more description regarding the process for extracting the keywords and obtaining the content presented on the interface may be found in related description hereinafter.

In some embodiments, the intelligent customer service interaction includes predicting the estimated usage function of the user. The processor may determine a user feature of the user based on a user behavior habit, and predict the estimated usage function based on the user feature.

The estimated usage function refers to an estimated function that the user wants to use. For example, the estimated usage function may include recommending music, playing songs, opening a designated song list, or the like.

The user behavior habit refers to data generated by various operations of the user on a related application. For example, the user behavior habit may include user browsing data (e.g., songs, videos, audios and videos, or the like that have been browsed) and user operation data (e.g., registration, follow, click, close, collection, comment, feedback, etc.).

In some embodiments, the processor may obtain the user behavior habit by a plurality of manners. For example, the processor may extract the user behavior habit based on other social networks, software, or the like. By way of example, the processor may embed related interfaces in various social networks, application programs/software (APPs), and websites in audio-related fields. The processor may obtain the user behavior habit through the related interfaces. By way of example, the processor may obtain operation data of the user from third-party music software within a preset time (e.g., within the last month), count distribution features of the operation data of the user (e.g., time periods for listening to songs, types of songs, etc.), and determine the user behavior habit. The operation data is data generated by operations of the user on an operation target (e.g., a function button, a song). For example, an operation may be any operation of the user on an object, for example, browsing, clicking, purchasing, commenting, or the like. Similarly, the processor may also obtain other user behavior habits based on other social platforms, or the like.

The user feature refers to an objective and/or behavioral feature that can characterize the user itself, for example, gender, age, income, personality, behavior habit, or the like of the user.

In some embodiments, the processor may obtain the user feature by common manners, for example, through network transmission, calling interfaces, or the like.

In some embodiments, the user feature may include an identity feature and/or a user operation feature. The identity feature and the user operation feature may characterize information such as characteristics, preferences, personality, or the like of the user itself from different perspectives, respectively.

The identity feature refers to a feature that represents basic information possessed by the user from the perspective of the user itself, for example, gender, age, personality, education background, income, occupation, risk tolerance, decision preference, or the like of the user.

The user operation feature refers to a feature representing various behavior information of the user. For example, the user operation feature may include a usage feature, a browsing feature, an information input feature, a device usage feature, a content consumption feature, a social feature, a search feature, a feedback and interaction feature, or the like, or any combination thereof. The usage feature may include commonly used functions, an operation feature (e.g., single-hand or double-hand operations), or the like. The browsing feature may include the feature of the user when browsing or searching for the operation target (e.g., from left to right, from top to bottom, or browsing according to a specific information acquisition path). The information input feature may include the feature of the user when performing information input. For example, the information input feature may include an input manner of a text, a voice, an image, or the like, or any combination thereof. The device usage feature includes the feature of the user when using a related application on different devices (e.g., mobile phones, tablets, computers, etc.), including a device usage frequency, a usage duration, or the like. The content consumption feature may include a selection preference, a browsing feature, and an interaction manner of the user for information content (e.g., an operation target or a function), such as whether the user likes to view graphics and texts, videos, or audios, or needs for different types of contents. The social feature includes habits of the user on social media, such as frequency and preferences of interactive behaviors such as posting, forwarding, commenting, or the like. The search feature refers to a feature of the user when performing information searching, such as choices of commonly used search engines, search keywords, or the like. The feedback and interaction feature may include preferences of the user for providing feedback and suggestions, and manners for solving problems when encountering problems during usage of products or services.

In some embodiments, the processor may determine the user feature of the user based on the user behavior habit by a plurality of manners. For example, the processor may embed related interfaces in various social networks, APPs, and websites in audio-related fields. The processor may obtain the identity feature of the user through the related interfaces. Account information may include registration information of the user and operation data of the user using the account. As another example, the processor may perform statistical analysis based on user behavior habits within a preset time period (e.g., the last month, the last half year), and determine the user operation feature.

In some embodiments, the processor may predict the estimated usage function based on the user feature by a plurality of manners. For example, the estimated usage function may be determined based on a preset table or a vector database constructed based on the historical data. The preset table and/or the vector database may be a table or a database that represents a correspondence relationship between the user feature and the estimated usage function. In some embodiments, the processor may also predict the estimated usage function through a prediction function model. The prediction function model may be a machine learning model, such as a trained neural network, or the like. An input of the prediction function model may include the user feature, and an output may include a predicted estimated usage function. The prediction function model may be trained based on a plurality of first training samples with a first label through various feasible manners. For example, parameter update may be performed based on a gradient descent approach. A first training sample may include a sample user feature, which may be obtained based on the historical data. A first label may be an actual selected usage function of a sample user, which may be obtained through manual annotation or annotation by the processor. The training process for the prediction function model is similar to that of the prediction model, and reference may be made to FIG. 12 and related description thereof.

In some embodiments of the present disclosure, by performing statistics on the user behavior habit, a recommended function that the user may wish to know may be accurately determined, thereby providing a better proactive service for the user. The user feature may more directly reflect the habit and preferences of the user, thereby further increasing the accuracy of the predicted estimated usage function.

In some embodiments, the processor may determine the question that the user wants to ask based on a historical user input sequence, a user operation sequence, the current connected device, and the tag information of the operable object through a plurality of manners. For example, the question may be determined through a preset rule or through the vector database. As another example, the processor may predict the question that the user wants to ask based on the historical user input sequence, the user operation sequence, the current connected device, and the tag information of the operable object by using a question prediction model.

The historical user input sequence refers to a sequence constituted by the initial input information and/or the target input information of the user within a preset time. The preset time may be determined based on an actual situation. The user operation sequence refers to a sequence constituted by operations performed by the user in the interface before opening an input dialog box. More descriptions regarding the tag information of the operable object may be found in the related description in the foregoing text. The current connected device refers to a related device connected to a current interface, for example, in-car Bluetooth, a speaker, or the like. In some embodiments, the processor may obtain the current connected device from the interface based on a plurality of manners, such as wired or wireless connection, or the like.

The question prediction model refers to a model for predicting the question that the user wants to ask. The question prediction model may be a machine learning model. The question prediction model may be trained based on a plurality of second training samples with a second label. A training process for the question prediction model is similar to that of the prediction model, and reference may be made to FIG. 12 and related description thereof. A second training sample may include a sample historical user input sequence, a sample user operation sequence, a sample current connected device, and tag information of a sample operable object. The second training sample may be obtained based on the historical data. A second label may be an actual asked question corresponding to a second training sample.

In some embodiments of the present disclosure, by predicting the question that the user wants to ask, the system may simplify the user input and improve the efficiency of the user operation. For example, the processor determines that the user has been operating a configuration of speaker 1 in the past ten minutes. When the user opens a dialog box, the processor may present the predicted question that the user wants to ask (e.g., "How to use a certain function of the speaker 1") in the interface. The user may simplify the input by selecting the question in the interface.

In some embodiments, the intelligent customer service interaction may also include automatically generating a target operation video based on the initial input information and/or the target input information. The target operation video refers to an operation video for guiding the user to complete a corresponding operation. The target operation video may include a robot simulation operation video, or the like. For example, if the target input information of the user is "How to combine the speaker 1 and the speaker 2 and play an audio source by using the combined speaker 1 and speaker 2", the processor may generate the target operation video corresponding to the question and present the target operation video to the user through the interface.

In some embodiments, the processor may generate the target operation video through a plurality of manners. For example, the processor may extract keywords from the initial input information and/or the target input information, and obtain the target operation video from the storage device based on the keywords.

In some embodiments, the processor may extract the keywords from the initial input information and/or the target input information, and directly obtain an existing operation video by retrieving from other platforms.

In some embodiments, the processor may obtain a plurality of preset basic operation images, operation video clips, complete operation videos, and feature materials of different devices (e.g., device models, logos, etc.). Further, the processor may synthesize the aforementioned basic operation images, operation video clips, and feature materials based on keywords, device models, or the like in the initial input information and/or the target input information, to generate the corresponding target operation video. In some embodiments, the processor may intercept a corresponding operation video segment from the aforementioned complete operation videos based on the keywords, the device models, or the like in the initial input information and/or the target input information, and combine with the feature materials to generate the target operation video. The target operation video may be annotated with model information, logo information, or the like corresponding to a device, without requiring recording a video for each type of device.

In some embodiments, the processor may generate the target operation video based on the initial input information and/or the target input information by using a video generation model.

The video generation model may be a machine learning model. In some embodiments, the video generation model may include a question determination layer and a video generation layer.

An input of the question determination layer may include the initial input information and/or the target input information, and the output may be a corresponding question. The initial input information and/or the target input information input to the video generation model includes a user query content. The question determination layer may be a Natural Language Processing (NLP) model, or the like. The question determination layer may be obtained by training with a plurality of third training samples having third labels. The training process for the question determination layer is similar to that of the prediction model, and reference may be made to related descriptions in FIG. 12.

A third training sample may be sample initial input information and/or sample target input information, and may be obtained based on the historical data. A third label may be an actual question corresponding to a third training sample, and the third label may be manually annotated.

The video generation layer may be a machine learning model, for example, Generative Adversarial Networks (GAN), or the like. An input of the video generation layer may include the corresponding label and a generation parameter; and the output may include the target operation video. The generation parameter refers to a related parameter of the target operation video, e.g., a video speed.

In some embodiments, the processor may determine the generation parameter based on user basic information and usage time. The user may input the user basic information through the interface. The processor may obtain the usage time of the user through the interface.

The user basic information refers to basic information related to the user, for example, an age, an education level, usage experience, or the like. The usage experience may include the user's experience of using a plurality of similar software applications. The richer the usage experience, the faster the video speed in the generation parameter.

In some embodiments, the processor may determine the generation parameter based on the user basic information and the usage time by querying a vector database. The vector database may be constructed based on the historical data, and may also be manually modified and supplemented. The vector database includes reference feature vectors constructed based on historical user basic information and historical usage time, and reference generation parameter corresponding to the reference feature vectors.

In some embodiments, the processor may construct a current feature vector based on the user basic information and the usage time, and by querying the vector database, use a reference generation parameter corresponding to a reference feature vector with the highest similarity to the current feature vector as the generation parameter corresponding to the current user. The similarity may be determined by calculating a Euclidean distance, cosine similarity, or the like.

The video generation layer may include a first model and a second model. The first model is configured to generate the target operation video. The generated target operation video is input to the second model together with the real teaching video. The second model may be used to discriminate whether the data input to the second model is the real teaching video. In some embodiments, the video generation layer may be obtained by training based on a plurality of fourth training samples. A fourth training sample may include a sample corresponding question, a sample generation parameter, and a real teaching video. The real teaching video is an operation video that can be used as a reference corresponding to the sample corresponding question and the sample generation parameter. In some embodiments, the fourth training samples may be obtained based on the historical data.

The training of the video generation layer includes a plurality of stages.

A first stage: fixing parameters of the first model, and training the second model. The sample corresponding question and the sample generation parameter are input to the first model to generate a video. The generated video, the sample corresponding question, and the sample generation parameter are combined to form a data pair (the label of which is 0). This data pair is then combined with the sample corresponding question, the sample generation parameter, and the corresponding real teaching video to form another data pair (the label of which is 1) as training data to train the second model, so that the second model can discriminate between the generated target operation video and the real teaching video as accurately as possible.

A second stage: fixing parameters of the second model, and training the first model. The first model and the second model obtained in the first stage are combined to form a composite model. The sample corresponding question and the sample generation parameter are input to the composite model. The composite model outputs a discrimination result (which includes 0 or 1, where 0 indicates that the target operation video output by the first model is not the real teaching video, and 1 indicates that the video output by the first model is the real teaching video). (1 - the discrimination result) is used as a loss function of the composite model, and the parameters of the first model are updated based on a gradient descent approach using the loss function. As the second stage is continuously trained, the more times the output result of the composite model is 1 or the more times the continuously output result is 1, which indicates that the ability of the first model to output the target operation video similar to the real teaching video is becoming stronger and stronger, and the similarity between the target operation video output by the first model and the real teaching video is continuously increasing.

Then, the first stage and the second stage are iterated, and finally, through continuous iteration, the abilities of the first model and the second model become stronger and stronger, the model converges, and a trained video generation layer is obtained.

Some embodiments of the present disclosure, by automatically generating the target operation video based on the initial input information and/or the target input information, may enable the target operation video to better meet the user's requirements, and can quickly and clearly present the operations to be performed to the user, thereby widening the application scope and lowering the threshold requirements for the user, which contributes to improving the user experience.

In 230, an operation feedback may be generated based on at least one of the initial input information or the target input information. In some embodiments, the operation 230 is executed by the processor 140 or a generating module 1530.

The operation feedback refers to feedback information related to user input. In some embodiments, the operation feedback may include a plurality of types, for example, at least one of image feedback, voice feedback, card feedback, or the like.

For example, the processor may present related images to the user in the feedback interface through the image feedback.

As another example, the processor may feedback related information to the user through voice via the voice feedback. The feedback interface is an interactive interface used for presenting the operation feedback.

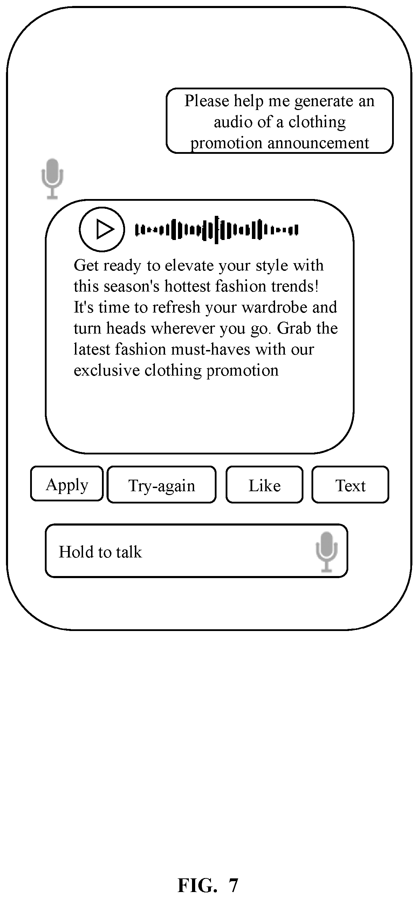

FIG. 7 is a schematic diagram illustrating an exemplary voice feedback according to some embodiments of the present disclosure. As shown in FIG. 7, the target input information of the user is "Please help me generate an audio of a clothing promotion announcement". The processor may present a generated audio in the feedback interface through the form of the voice feedback. The feedback interface further includes an apply button, a try-again button, a like button, a text button, or the like. When the user selects the text button, the processor may recognize the feedback voice as texts.

The card feedback refers to feedback performed on the user input through a card. The process for the user adjusting audio is often divided into a plurality of steps, e.g., creating a partition, allocating a device, playing an audio source, or the like. Through the card feedback, a complete process or solution can be displayed to the user in the feedback interface in the form of a card.

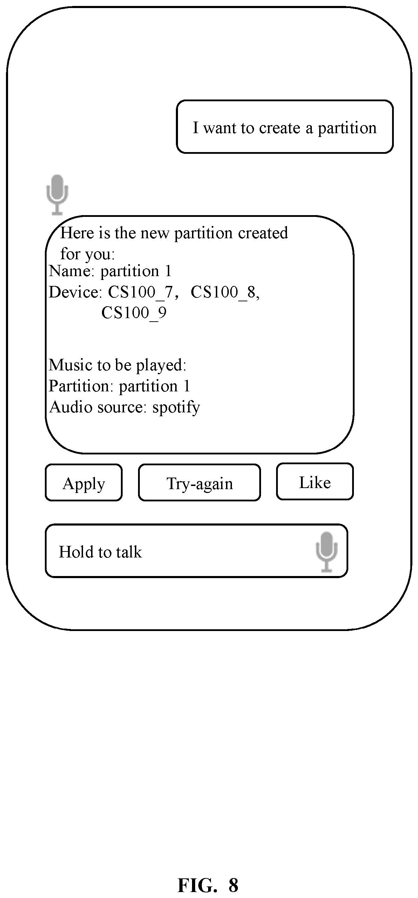

FIG. 8 is a schematic diagram illustrating an exemplary card feedback according to some embodiments of the present disclosure. As shown in FIG. 8, the initial input information of the user is "I want to create a partition". The processor may create a partition 1 based on the initial input information, detect devices that may be allocated to the partition 1 and audio sources that may be played by the partition 1, and display the related information to the user in the form of a card. As shown in FIG. 8, based on "I want to create a partition", the card feedback may feedback the name of the new partition (the partition 1), the devices that may be allocated to the new partition (e.g., CS100_7, CS100_8, CS100_9), and the audio source that may be used for playing in the new partition (e.g., spotify). The bottom of the card includes an apply button, a try-again button, and a like button. When the user selects the apply button for the card, the processor may perform a corresponding operation according to the card content. When the user selects the try-again button for the card, the processor may feedback the card content corresponding to the user input again. When the user selects the like button for the card, the processor may mark the card as preferred by the user.

In some embodiments, the feedback interface of the operation feedback may include a user modification window. The user modification window refers to a window for a user to modify feedback content. The user can interact with the user modification window through point-and-click, input, or the like, to modify the related content of the operation feedback.

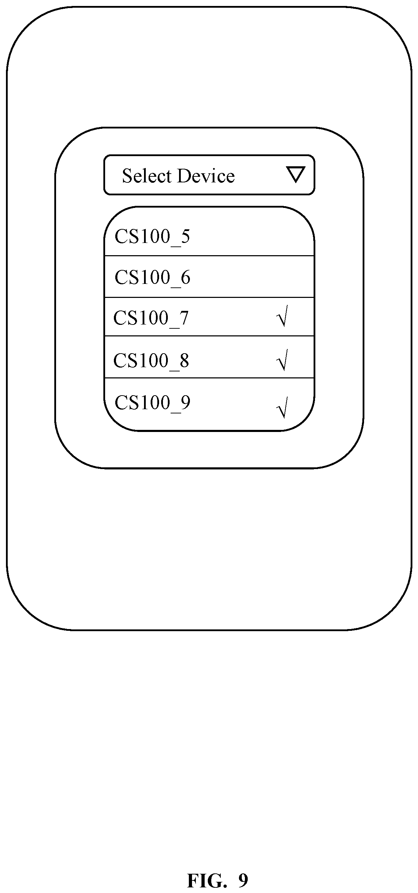

FIG. 9 is a schematic diagram illustrating an exemplary user modification window according to some embodiments of the present disclosure. As shown in FIG. 9, the user may modify the devices in the card feedback by selecting desired devices. For example, the devices in the card feedback include CS100_5, CS100_6, CS100_7, CS100_8, and CS100_9, and the user may deselect CS100_7, CS100_8, and CS100_9 by clicking on them in the user modification window, or select CS100_5 and CS100_6 by clicking on the corresponding devices.

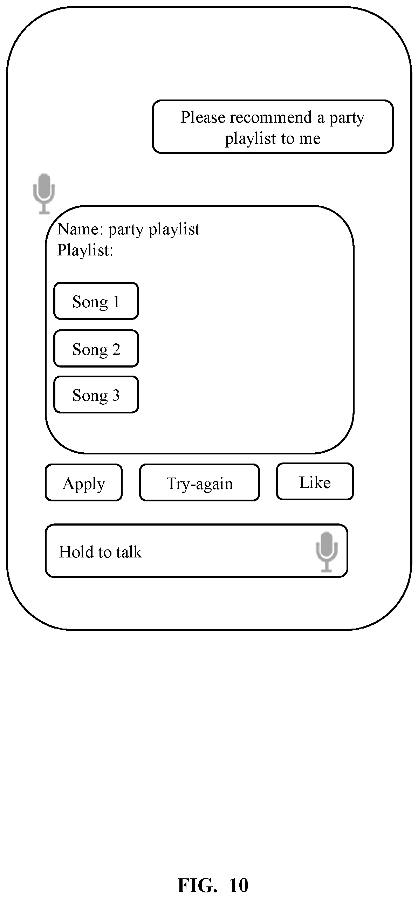

FIG. 10 is a schematic diagram illustrating another exemplary card feedback according to some embodiments of the present disclosure. As shown in FIG. 10, the initial input information of the user is "Please recommend a party playlist to me". The processor may feedback a recommended playlist in the form of a card to the feedback interface based on the initial input information, and the user may play the corresponding music by directly clicking on a song.

In some embodiments, the operation feedback may also be real-time generated feedback during the process for performing the target operation after the user inputs the initial input information. For example, the operation feedback may be confirmation information or instruction guidance information that pops up on the interface when performing the display screen operation (e.g., moving, zooming the operable object, etc.). As another example, the operation feedback may be confirmation information of whether to correct displayed to the user when performing the input correction operation. As yet another example, the operation feedback may be a recommended inquiry question displayed in the interface when performing the intelligent customer service interaction.

Some embodiments of the present disclosure, by determining the operation feedback, can feedback the related content to the user in a visualized form, so as to make the feedback content clearer and more concise, and by using the user modification window, it helps to further simplify user operations based on user requirements and facilitate user usage.

In some embodiments of the present disclosure, by determining the target input information of the user based on the initial input information of the user and the tag information of an operable object, and determining the target operation and generating the operation feedback based on the initial input information and/or the target input information, the user operation can be effectively simplified, and the user experience and usage efficiency can be improved.

FIG. 11 is a schematic diagram illustrating an exemplary intelligent correction model according to some embodiments of the present disclosure.

In some embodiments, as described in FIG. 11, the processor may determine corrected input information 1150 through an intelligent correction model 1140 based on at least one of initial input information 1110 or target input information 1120, to perform automatic correction.

More descriptions regarding the initial input information and the target input information, reference can be found in FIG. 2 and related description thereof.

The intelligent correction model refers to a model that performs correction on the initial input information and/or the target input information. In some embodiments, the intelligent correction model may be a machine learning model. For example, the intelligent correction model may be a neural network model. As another example, the intelligent correction model may be at least one or any combination of a Graph Neural Network (GNN) model, a Convolutional Neural Network (CNN) model, or the like.

In some embodiments, an input of the intelligent correction model may include the initial input information and/or the target input information; and an output of the intelligent correction model may include the corrected input information.

The corrected input information refers to corrected initial input information and/or corrected target input information.

In some embodiments, as shown in FIG. 11, input data of the intelligent correction model 1140 may be features of the input data represented by an input graph 1130 with a graph structure.

The input graph may be used to characterize various language elements and relationships among them. In some embodiments, the input graph may be a data structure composed of nodes and edges, where the edges connect the nodes, and the nodes and the edges may have features. The language element refers to an element such as keywords, phrases, words, or the like. As shown in FIG. 11, the nodes of the input graph may include A, B, C, or the like, and the edges may include AB, BC, or the like.

The nodes correspond to different language elements in the initial input information and/or the target input information. Node features may reflect information related to the language elements. For example, the node features may include a word part of speech of the language elements, a domain of affiliation, and a phrase structure features.

The word part of speech refers to a grammatical role or a classification that a word plays in a sentence. For example, the word part of speech includes noun, verb, adjective, adverb, or the like.

The domain of affiliation reflects application of words/terms in a specific domain. For example, the domain of affiliation may include daily life, social science, humanity, or the like.

The phrase structure feature is used to reflect characteristics of phrases in terms of composition and structure. For example, the phrase structure may include a subject-predicate phrase, a verb-object phrase, a coordinate phrase, or the like.

The edges may correspond to relationships among the language elements. For example, an edge exists between two language elements connected based on grammar rules in the initial input information and/or the target input information. In some embodiments, the edges may be directed edges. A grammatical relationship between two adjacent language elements (such as a verb-object relationship or a subject-predicate relationship) is the direction of the edge, a subject or a verb may be used as a starting point of the edge, and an object or a predicate may be used as an ending point of the edge. The edge features may reflect a dependency relationship, a modification relationship, or the like, between two adjacent language elements. For example, the edge features may include a grammatical relationship between the two language elements, or the like. The grammar rules are used to guide correct construction and usage of texts, and the grammar rules may combine words and phrases into meaningful sentences. Exemplarily, the "set" and "volume" nodes are sequentially connected to form a directed edge with a verb-object relationship therebetween.

The node features and edges features may be determined based on input data in various manners. The manner is the manner described in the above-described embodiments, and may also be other manners. The input data may include current initial input information and/or current target input information, and may also include historical initial input information and/or historical target input information.

In some embodiments, the node features may also include a time, a position, or the like of node input, reflecting a usage habit of the user. In some embodiments, the node features are also related to an input manner of the user. For example, when the user inputs the initial input information through text input, the node features may also include a typing speed and a backspace count of the user when inputting the language element corresponding to the node. When the user inputs the initial input information through voice input, the node features may also include a speech rate corresponding to the node input by the user and an emotional state of the user. Backspace is used to delete a previous character of an insertion point. The backspace count refers to a total count of a backspace key used by the user when inputting the node.

The intelligent correction model may be trained and obtained based on training data. The training data includes a fifth training sample and a fifth label. For example, the fifth training sample may include a sample input graph, and the fifth label may be whether words corresponding to nodes are wrong, whether positions of the nodes are wrong, and corrected nodes. Nodes and nodes features, and edges and edges features of the sample input graph are similar to the above descriptions. The fifth training sample may be determined based on historical data, and the fifth label may be determined by the processor or manual annotation. The training process for the intelligent correction model is similar to that of the prediction model, and reference can be made to FIG. 12 and related description thereof.

In some embodiments, the processor may sequentially connect each corrected node and the remaining nodes based on the grammar rules to form the corrected input information. In some embodiments, the processor may correct erroneous nodes, and connect the nodes sequentially based on an initial connection order of the input graph, to form the corrected input information. In some embodiments, the initial input information and/or the target input information may be corrected in real time based on the intelligent correction model.

In some embodiments of the present disclosure, during a user input process, real-time automatic correction may be efficiently and accurately performed on the initial input information and/or the target input information through the intelligent correction model, which is beneficial for improving the accuracy of the input information, and also beneficial for improving the user experience and the input efficiency of the user. Through the input graph, correction may be performed on the input information based on the grammar rules, to obtain the meaningful and corrected input information, which is beneficial for subsequently generating accurate operation feedback.

FIG. 12 is a schematic diagram illustrating an exemplary prediction model according to some embodiments of the present disclosure.

In some embodiments, as shown in FIG. 12, the intelligent customer service interaction includes predicting target input information of a user, and the processor may determine a prediction result 1260 through a prediction model 1250 based on initial input information 1210, a current connected device 1220, an operable object 1230, and tag information 1240; and determine target input information 1270 based on the prediction result 1260.

More details regarding the initial input information, the current connected device, the operable object, and the tag information may be found in FIG. 2 and related descriptions thereof.

The prediction result refers to a content that the user wants to input. The user may select the prediction result to be a part or all of the target input information.

In some embodiments, a count of the prediction result may be at least one, and the count of the prediction result may dynamically change and/or may be negatively correlated with a proportion of times the user clicks the prediction result.

The dynamic change refers to the count of the prediction result changing with operations of the user. For example, when the initial input information of the user is "I want play", if a preset count of prediction results is displayed on the interaction interface, and the user does not select the preset count of prediction results and continues to input the initial input information, it indicates that there is no prediction result desired by the user among the aforementioned prediction results. The count of the prediction result may be too small, and the count of the prediction result may be increased.

In some embodiments, the count of the prediction result needs to satisfy a preset requirement, to ensure that the prediction result of the interface can be clearly displayed and is convenient for user operation.

The preset requirement is a judgment condition for evaluating the count of the prediction result. For example, the preset requirement may include that the count of the prediction result is within a preset range. The preset range may be determined based on experiments or experience. It should be noted that, if the count of the prediction results in the interaction interface is too large, it may lead to the interaction interface being too crowded, making it difficult for the user to find the desired prediction result, and simultaneously, too many prediction results may also lead to visual confusion of the interaction interface, reducing the overall aesthetic appeal and the user experience. If the count of the prediction results of the interaction interface is too small, it may cause the interaction interface to appear too concise or empty, lacking necessary functions, making it difficult for the user to obtain the desired prediction result, thereby affecting the user experience.

In some embodiments, the count of the prediction result is negatively correlated with the proportion of times the user clicks the prediction result. For example, the greater the proportion of times the user clicks the prediction result, the smaller the count of the prediction result. The proportion of times the user clicks the prediction result refers to a ratio of a count of times the user clicks the prediction result within a preset time period to a count of times the user inputs the same initial input information. The preset time period may be a system default value or a system preset value. In some embodiments, the processor may count operations of the user clicking the prediction result within the preset time period through the network, to determine the proportion of times the user clicks the prediction result.

In some embodiments, the count of the prediction result may dynamically change, and the count of the prediction result is negatively correlated with the proportion of times the user clicks the prediction result.

In some embodiments of the present disclosure, by dynamically displaying the prediction result to the user, the prediction result that satisfies actual demands of the user may be displayed while taking page layout into account, which is beneficial for the user to quickly obtain the desired input content, further improving the user experience.

In some embodiments, the prediction result may be presented in a sorting mode and/or a highlighting mode.

In some embodiments, the sorting mode refers to sorting based on evaluation values of a plurality of prediction results (e.g., in an ascending or descending order). The evaluation value may be used for evaluating a probability that the prediction result is selected by the user. The higher the evaluation value, the higher the probability that the corresponding prediction result is the content that the user wants to input.

In some embodiments, the evaluation value may be determined based on a historical click count of the prediction result. For example, the processor may determine the evaluation value based on a proportion of a historical click count of each prediction result. The proportion of the historical click count of the prediction result refers to a proportion of times the user clicks the prediction result within a historical time period.

In some embodiments, the highlighting mode may be implemented in a plurality of manners. For example, the highlighting mode includes but is not limited to increasing a font size of an element, a special font different from a regular font, a highlight color, an underline, an animation effect (e.g., gradually enlarging or rotating an element), or the like, or any combination thereof.

In some embodiments, the prediction results with different evaluation values may correspond to a highlighting mode or a combination of a plurality of the highlighting modes. For example, the prediction result with a higher evaluation value may correspond to a combination of a plurality of the highlighting modes (e.g., placed in a higher ranking position and having an enlarged font size, etc.), or the prediction result with a higher evaluation value may correspond to one highlighting mode (e.g., only placed in a higher ranking position or only having an enlarged font size).

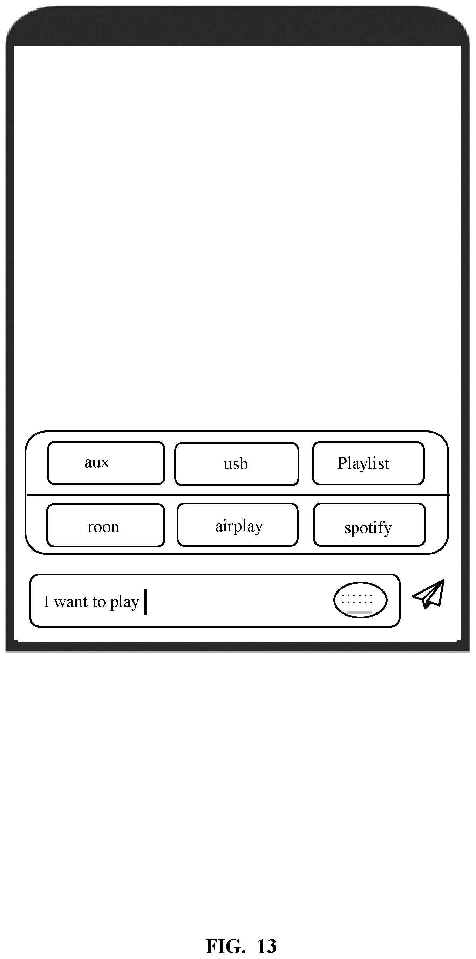

FIG. 13 is a schematic diagram illustrating an exemplary prediction result according to some embodiments of the present disclosure. For example, as shown in FIG. 13, after the user inputs the initial input information "I want play", the prediction result of the interaction interface includes six words. Assuming that according to statistical data within a preset time period, the user inputs the initial input information "I want play" a total of ten times, wherein the user clicks "aux" eight times (i.e., the user clicks the prediction result with a high frequency), then the processor presents the prediction result "aux" in the highlighting mode at the current time, e.g., with an enlarged font size and in a first ranking position. The current time may refer to a time point when the user inputs "I want play".

In some embodiments of the present disclosure, by presenting the prediction result through the sorting mode and/or the highlighting mode, some prediction results preferred by the user are relatively prioritized or relatively highlighted, which enables the user to quickly obtain the desired input content, and may further improve the input efficiency.

In some embodiments, the processor may output the prediction result based on the initial input information, the current connected device, and the tag information of the operable object through the prediction model.

The prediction model may be a Natural Language Processing (NLP) model. An input of the prediction model may include the initial input information, the current connected device, the operable object, and the tag information thereof; and an output of the prediction model may be the prediction result.

In some embodiments, the prediction model may be trained and obtained based on a large number of sixth training samples with sixth labels. For example, a plurality of the sixth training samples with the sixth labels may be input into the prediction model, a loss function may be constructed based on the sixth labels and a prediction result of an initial prediction model, the initial prediction model may be iteratively updated based on the loss function, and when the loss function of the initial prediction model satisfies an end condition, the training is completed. The end condition may include convergence of the loss function, a count of iterations reaching a threshold, or the like.

In some embodiments, the processor may first pre-train the prediction model using a large amount of user data, and then perform reinforcement training on the prediction model using relevant data of a current user.

In some embodiments, each sixth training sample may include sample initial input information, a sample operable object and the tag information thereof, and a sample connected device, and the sixth training samples may be obtained based on the historical data. The sixth label is historical actual transmission information corresponding to the sixth training sample. The sixth label may be manually annotated.

In some embodiments, the sixth training samples and the sixth labels may be obtained through annotation. For example, a large number of complete input statements of users may be used as the sixth labels. Keywords in the complete input statements may be extracted as sample initial input information. An operable object and tag information thereof, and a connected device corresponding to each complete input statement may be determined as a sample operable object and the tag information thereof, and a sample connected device.

In some embodiments, when performing reinforcement training on the prediction model, the sixth training samples may further include personalized information of the current user. For example, the personalized information may include basic information such as face and identity age of the user. By adding the personalized information of the user to the samples, a personalized prediction capability of the prediction model may be improved.

In some embodiments, the processor may determine the target input information based on the prediction result in a plurality of manners. For example, the processor may capture a selection operation performed by the user on the prediction result in the interaction interface through the network, or the like. Specifically, the processor may obtain a click operation and/or a gesture operation performed by the user on the prediction result on the interaction interface and determine the prediction result selected by the user as a part or all of the target input information. In some embodiments, based on the initial input information input by the user in the interaction interface and the operable object and the tag information of the interaction interface, application software (or a background processor) may automatically predict the prediction result of the user, and reflect the prediction result in an input information display box of the interaction interface. Then, further contents may be displayed to the user on the interaction interface based on the prediction result. As shown in FIG. 13, when the initial input information of the user in the interaction interface is "I want to play", the processor may obtain a playback content such as "aux", "USB", "playlist", "roon", "airplay", "spotify", or the like, from the prediction result predicted from the initial input information, and display the playback content to the user. The processor may use the prediction result selected by the user through the interface as a part or all of the target input information.

In some embodiments of the present disclosure, through the prediction model, the content that the user wants to input may be accurately and efficiently predicted, which is beneficial for improving the input efficiency of the user, further improving the user experience.

FIG. 14 is a schematic diagram illustrating an exemplary prediction recommendation model according to some embodiments of the present disclosure.

In some embodiments, the intelligent customer service interaction may include predicting an emotional state of a user. The processor may predict the emotional state based on an input feature of the user, and may perform function recommendation based on the emotional state.

The emotional state of the user refers to a state that may reflect a current emotion of the user. For example, categories of the emotional state of the user may include happiness, sadness, anger, depression, calmness, or the like.

The function recommendation refers to a process for recommending related functions or services to the user based on needs and the state of the user. In some embodiments, for different emotional states, the corresponding function recommendations may be different.

The input feature is configured to reflect a characteristic of the initial input information of the user. In some embodiments, the initial input information of the user is voice, and correspondingly, the input feature may include metrics such as pitch, speaking rate, frequency, energy, or the like. The energy refers to a degree of loudness of the sound. The energy may be determined by an amplitude of the sound. The greater the amplitude, the greater the energy, and the louder the sound. In some embodiments, the processor may determine the energy of the sound based on a sum of square powers of amplitudes of the sound within a time period. The time period may be determined based on a duration of the sound.

In some embodiments, the input feature may be represented as (A, B, C, ...) through a feature vector, wherein element A represents pitch, element B represents speaking rate, and element C represents energy, or the like.

In some embodiments, the processor may obtain audio data of the user through an installed recording device, and then extract the input feature of the user from the audio data. The audio data may refer to a voice of the user interacting with the intelligent customer service interaction, or the like.

In some embodiments, the processor may extract the input feature through an audio feature extraction algorithm. The audio feature extraction algorithm may include, but is not limited to, Linear Prediction Coefficients (LPC), Perceptual Linear Predictive (PLP), Linear Predictive Cepstral Coefficient (LPCC), and Mel-Frequency Cepstrum Coefficient (MFCC).

In some embodiments, before extracting the input feature, the processor may preprocess the audio data. The preprocessing of the audio data includes at least one of pre-emphasis, framing, windowing, or the like.

In some embodiments, the processor may predict the emotional state of the user based on the input feature of the user, and obtain a recommendation function (such as making phone calls, listening to songs, sending text messages, etc.) corresponding to a current emotional state of the user based on a correspondence between emotional states of different users and different recommendation functions. The correspondence may be determined through historical data and/or prior knowledge.

In some embodiments, as shown in FIG. 14, the processor may process an input feature 1410 of the user based on a prediction recommendation model 1420, predict an emotional state 1430 of the user, and obtain a recommendation function list 1440 corresponding to the emotional state.

The recommendation function list refers to a list composed of different recommendation functions. The recommendation function refers to a function recommended for user usage. For example, if the user exhibits a positive emotion, it indicates that the user is inclined to use functions that may provide entertainment or relaxation. The processor may determine listening to songs, playing short videos, or the like as the recommendation function. If the user exhibits a negative emotion, it indicates that the user is more inclined to use functions that may help to solve problems or relieve stress. The processor may determine making phone calls, or the like as the recommendation function.

In some embodiments, the prediction recommendation model may be a machine learning model. For example, the prediction recommendation model may include any one or a combination of various feasible models, such as an RNN model, a DNN model, or a CNN model.

In some embodiments, an input of the prediction recommendation model may include the input feature (wherein the input feature may be represented through a feature vector), and an output of the prediction recommendation model may include the emotional state of the user and the recommendation function list applicable to the emotional state. The emotional state of the user output may be represented through categories of the emotional state.

In some embodiments, the prediction recommendation model may be obtained by training based on a large number of seventh training samples with seventh labels through various feasible manners. For example, parameter update may be performed based on a gradient descent approach. The training process for the prediction recommendation model is similar to that of the prediction model, and may refer to FIG. 12 and related descriptions thereof.

In some embodiments, a seventh training sample may include a sample input feature of a sample user. The seventh training sample may be obtained based on historical data.

In some embodiments, a seventh label may be a category of an actual emotional state of a sample user and/or an actual function of a historical operation of the sample user. For example, the seventh label may be obtained by performing annotation based on the function selected by the sample user in an actual operation and the category of the actual emotional state of the sample user.

In some embodiments, the categories of the actual emotional state may be various. For example, the categories of the actual emotional state may be happiness, sadness, anger, depression, calmness, or the like. As another example, the categories of the actual emotional state may be divided into certain levels. For example, the category of happiness may be divided into a first level of happiness, a second level of happiness, a third level of happiness, or the like.

In some embodiments, the processor may obtain image data and video data of expressions of the sample user through an installed camera device, and the categories of the actual emotional state of the sample user may be annotated by manual operation based on the image data and/or the video data. The camera device may include a camera, a camcorder, or the like.

In some embodiments of the present disclosure, by predicting the emotional state based on the input feature of the user and performing recommendations of different functions, an intrinsic emotion and an extrinsic expression of the user are fully considered. This achieves targeted recommendations of different functions for different users, and may improve the user experience brought by the input of the user. By using the model to process the input feature, types and a count of functions to be pushed may be more accurately determined.

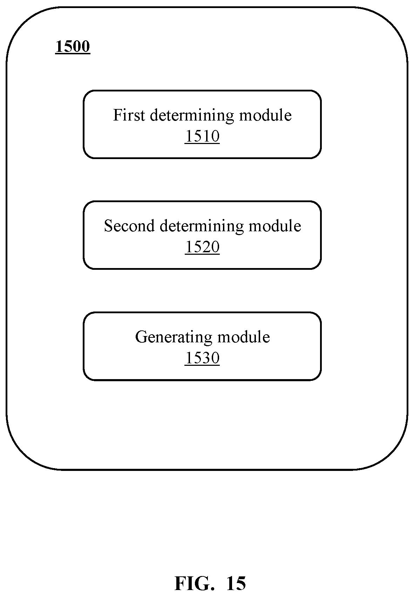

FIG. 15 is a block schematic diagram illustrating an exemplary system for interaction based on natural language according to some embodiments of the present disclosure.

In some embodiments, the system for interaction based on natural language 1500 may include the first determining module 1510, the second determining module 1520, and the generating module 1530.

In some embodiments, the first determining module 1510 may be configured to determine target input information of a user based on initial input information of the user and tag information of an operable object. The tag information reflects a feature of the operable object.

In some embodiments, the second determining module 1520 may be configured to determine a target operation based on at least one of the initial input information or the target input information. The target operation includes at least one of a display screen operation, an input correction operation, and an intelligent customer service interaction.

In some embodiments, the generating module 1530 may be configured to generate an operation feedback based on at least one of the initial input information or the target input information. A feedback interface of the operation feedback includes a user modification window.

In some embodiments, the system for interaction based on natural language 1500 further includes a drag module (not shown in the figure). The drag module may be configured to determine the target input information based on a drag instruction of the user for an operation target in a display screen.

In some embodiments, the operation target includes at least one of a draggable target and a non-draggable target, and a first presentation mode corresponding to the draggable target is different from a first presentation mode corresponding to the non-draggable target.

In some embodiments, the display screen originates from at least one platform, and the at least one platform corresponds to a second presentation mode of the operation target; and/or the display screen originates from at least one system, and the at least one system corresponds to a third presentation mode of the operation target. The second presentation mode is different from the third presentation mode.

In some embodiments, the second determining module 1520 is further configured to determine corrected input information through an intelligent correction model based on at least one of the initial input information or the target input information, to perform automatic correction. The intelligent correction model is a machine learning model.

In some embodiments, the intelligent customer service interaction includes predicting the target input information of the user. The second determining module 1520 is further configured to: determine a prediction result through a prediction model based on the initial input information, a current connected device, the operable object, and the tag information, wherein the prediction model is a machine learning model; and determine the target input information based on the prediction result.

In some embodiments, a count of the prediction result is at least one, and the count of the prediction result dynamically changes and/or is negatively correlated with a proportion of times the user clicks the prediction result.

In some embodiments, the intelligent customer service interaction includes predicting an estimated usage function of the use. The second determining module 1520 is further configured to: determine a user feature of the user based on a user behavior habit; and predict the estimated usage function based on the user feature.

In some embodiments, the intelligent customer service interaction includes predicting an emotional state of the user. The second determining module 1520 is further configured to: predict the emotional state based on an input feature of the user, and perform a function recommendation based on the emotional state.

Further description regarding the system for interaction based on natural language 1500 may refer to related descriptions above.

It should be understood that the system for interaction based on natural language 1500 and modules thereof shown in FIG. 15 may be implemented in various manners. It should be noted that the above description of the system for interaction based on natural language 1500 and modules thereof is merely for convenience of description and does not limit the present disclosure to the scope of the illustrated embodiments. It can be understood that, for those skilled in the art, after understanding the principle of the system, various modules may be arbitrarily combined, or subsystems may be formed and connected to other modules without departing from this principle. In some embodiments, the first determining module 1510, the second determining module 1520, and the generating module 1530 disclosed in FIG. 15 may be different modules in a system, or one module may implement functions of two or more of the above modules. For example, the modules may share a storage module, or the modules may each have their own respective storage module. Such variations are all within the protection scope of the present disclosure.

Some embodiments of the present disclosure provide an interaction apparatus based on natural language, including at least one processor and at least one memory. The at least one memory is configured to store computer instructions, and the at least one processor is configured to execute at least a portion of the computer instructions to implement the aforementioned method for interaction based on natural language.

Some embodiments of the present disclosure provide a non-transitory computer-readable storage medium. The storage medium stores computer instructions, and when a computer reads the computer instructions in the storage medium, the computer executes the aforementioned method for interaction based on natural language.

It should be noted that the above description regarding processes is merely for illustration and explanation, and does not limit the applicability of the present disclosure. Those skilled in the art may make various modifications and changes to the processes under the guidance of the present disclosure. However, these modifications and changes still fall within the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures, or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or collocation of matter, or any new and useful improvement thereof. Accordingly, aspects of the present disclosure may be implemented entirely hardware, entirely software (including firmware, resident software, microcode, etc.) or combining software and hardware implementation that may all generally be referred to herein as a "unit," "module," or "system." Furthermore, aspects of the present disclosure may take the form of a computer program product embodied in one or more computer readable media having computer-readable program code embodied thereon.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

In some embodiments, numbers describing the number of ingredients and attributes are used. It should be understood that such numbers used for the description of the embodiments use the modifier "about", "approximately", or "substantially" in some examples. Unless otherwise stated, "about", "approximately", or "substantially" indicates that the number is allowed to vary by ±20%. Correspondingly, in some embodiments, the numerical parameters used in the description and claims are approximate values, and the approximate values may be changed according to the required characteristics of individual embodiments. In some embodiments, the numerical parameters should consider the prescribed effective digits and adopt the method of general digit retention. Although the numerical ranges and parameters used to confirm the breadth of the range in some embodiments of the present disclosure are approximate values, in specific embodiments, settings of such numerical values are as accurate as possible within a feasible range.

For each patent, patent application, patent application publication, or other materials cited in the present disclosure, such as articles, books, specifications, publications, documents, or the like, the entire contents of which are hereby incorporated into the present disclosure as a reference. The application history documents that are inconsistent or conflict with the content of the present disclosure are excluded, and the documents that restrict the broadest scope of the claims of the present disclosure (currently or later attached to the present disclosure) are also excluded. It should be noted that if there is any inconsistency or conflict between the description, definition, and/or use of terms in the auxiliary materials of the present disclosure and the content of the present disclosure, the description, definition, and/or use of terms in the present disclosure is subject to the present disclosure.

Finally, it should be understood that the embodiments described in the present disclosure are only used to illustrate the principles of the embodiments of the present disclosure. Other variations may also fall within the scope of the present disclosure. Therefore, as an example and not a limitation, alternative configurations of the embodiments of the present disclosure may be regarded as consistent with the teaching of the present disclosure. Accordingly, the embodiments of the present disclosure are not limited to the embodiments introduced and described in the present disclosure explicitly.

## Claims

1. A method for interaction based on natural language, wherein the method is executed by a processor and comprises:
determining target input information of a user based on initial input information of the user and tag information of an operable object, wherein the tag information reflects a feature of the operable object;
determining a target operation based on at least one of the initial input information or the target input information, wherein the target operation includes at least one of a display screen operation, an input correction operation, and an intelligent customer service interaction; and
generating an operation feedback based on at least one of the initial input information or the target input information, wherein a feedback interface of the operation feedback includes a user modification window.

2. The method according to claim 1, further comprising:
determining the target input information based on a drag instruction of the user for an operation target in a display screen.

3. The method according to claim 2, wherein the operation target includes at least one of a draggable target and a non-draggable target, and a first presentation mode corresponding to the draggable target is different from a first presentation mode corresponding to the non-draggable target.

4. The method according to claim 2, wherein the display screen originates from at least one platform, and the at least one platform corresponds to a second presentation mode of the operation target; and/or
the display screen originates from at least one system, and the at least one system corresponds to a third presentation mode of the operation target, wherein the second presentation mode is different from the third presentation mode.

5. The method according to claim 1, wherein the input correction operation includes:
determining corrected input information through an intelligent correction model based on at least one of the initial input information or the target input information, to perform automatic correction, wherein the intelligent correction model is a machine learning model.

6. The method according to claim 1, wherein the intelligent customer service interaction includes predicting the target input information of the user, and the method further comprises:
determining a prediction result through a prediction model based on the initial input information, a current connected device, the operable object, and the tag information, wherein the prediction model is a machine learning model; and
determining the target input information based on the prediction result.

7. The method according to claim 6, wherein a count of the prediction result is at least one, and the count of the prediction result dynamically changes and/or is negatively correlated with a proportion of times the user clicks the prediction result.

8. The method according to claim 6, wherein the prediction result is presented in at least one of a sorting mode or a highlighting mode.

9. The method according to claim 1, wherein the intelligent customer service interaction includes predicting an estimated usage function of the user, and the method further comprises:
determining a user feature of the user based on a user behavior habit; and
predicting the estimated usage function based on the user feature.

10. The method according to claim 1, wherein the intelligent customer service interaction includes predicting an emotional state of the user, and the method further comprises:
predicting the emotional state based on an input feature of the user, and performing a function recommendation based on the emotional state.

11. A system for interaction based on natural language, comprising:
a first determining module, configured to determine target input information of a user based on initial input information of the user and tag information of an operable object, wherein the tag information reflects a feature of the operable object;
a second determining module, configured to determine a target operation based on at least one of the initial input information or the target input information, wherein the target operation includes at least one of a display screen operation, an input correction operation, and an intelligent customer service interaction; and
a generating module, configured to generate an operation feedback based on at least one of the initial input information or the target input information, wherein a feedback interface of the operation feedback includes a user modification window.

12. The system according to claim 11, wherein the system further comprises a drag module, and the drag module is configured to:
determine the target input information based on a drag instruction of the user for an operation target in a display screen.

13. The system according to claim 12, wherein the operation target includes at least one of a draggable target and a non-draggable target, and a first presentation mode corresponding to the draggable target is different from a first presentation mode corresponding to the non-draggable target.

14. The system according to claim 12, wherein the display screen originates from at least one platform, and the at least one platform corresponds to a second presentation mode of the operation target; and/or
the display screen originates from at least one system, and the at least one system corresponds to a third presentation mode of the operation target, wherein the second presentation mode is different from the third presentation mode.

15. The system according to claim 11, wherein the second determining module is further configured to:
determine corrected input information through an intelligent correction model based on at least one of the initial input information or the target input information, to perform automatic correction, wherein the intelligent correction model is a machine learning model.

16. The system according to claim 11, wherein the intelligent customer service interaction includes predicting the target input information of the user, and the second determining module is further configured to:
determine a prediction result through a prediction model based on the initial input information, a current connected device, the operable object, and the tag information, wherein the prediction model is a machine learning model; and
determine the target input information based on the prediction result.

17. The system according to claim 16, wherein a count of the prediction result is at least one, and the count of the prediction result dynamically changes and/or is negatively correlated with a proportion of times the user clicks the prediction result.

18. The system according to claim 11, wherein the intelligent customer service interaction includes predicting an estimated usage function of the user, and the second determining module is further configured to:
determine a user feature of the user based on a user behavior habit; and
predict the estimated usage function based on the user feature.

19. The system according to claim 11, wherein the intelligent customer service interaction includes predicting an emotional state of the user, and the second determining module is further configured to:
predict the emotional state based on an input feature of the user, and perform a function recommendation based on the emotional state.

20. A non-transitory computer-readable storage medium, wherein the storage medium stores computer instructions, and when a computer reads the computer instructions in the storage medium, the computer executes the method for interaction based on natural language according to any one of claims 1 to 10.
